# EUROPEAN PATENT SPECIFICATION

(11) **EP 2 596 698 B1**
(45) Date of publication and mention of the grant of the patent: **14.09.2016**
(21) Application number: 13156255.5
(22) Date of filing: 26.03.2012
(51) Int. Cl.: A01G 1/04, C05F 9/04

(54) **A METHOD OF TRANSPORTING COMPOST**
Verfahren zum Transportieren von Kompost
Procédé de transport de compost

(30) Priority: 03.05.2011 NL 1038791
(43) Date of publication of application: 29.05.2013
(62) Divisional of application: 12002101.9
(73) Proprietor: Cedar Spring International, Road Town Tortola (VG)
(72) Inventor: Kampen, Antonius, 97405, OR Oregon Eugene (US)
(74) Representative: Altenburg, Bernardus Stephanus Franciscus

(56) References cited:
- EP-A1- 2 520 159
- BE-A1- 904 994
- GB-A- 2 317 898
- IE-B2- S72 947
- DATABASE WPI Week 200031 Thomson Scientific, London, GB; AN 2000-353021 XP002681768, & HU 9 800 638 A1 (DARAI B G) 28 February 2000 (2000-02-28)

## Description

The present invention relates to a method of transporting compost inoculated with mycelium of mushrooms, wherein the compost is transported at a temperature of less than 20 °C.

Maintaining the temperature of compost during transport is of importance, in particular to maintain the nutritional content and/or the biological make-up of the compost. Metabolization of nutrients in the compost leads to the generation of heat, causing the temperature of the compost to rise. Metabolization may also lead to a change in the gas composition in the compost. The rise in temperature and/or change in gas composition may result in an undesirable organism getting the upper hand. Thus there is an undesirable shift in the biological make-up. Also, nutrients metabolized by an organism other than the desired organism(s) may lead to an economical loss. It is known in the art (EP1767086) to cool compost by making it into blocks of compost, and transport the blocks in a temperature-controlled environment.

A disadvantage of this method is that it works only satisfactorily for small blocks (<25 kg), which is labour intensive and costly.

The object of the method according to the invention is to provide a method that allows for the transport of a large mass of compost.

To this end, a method according to the preamble is characterized in that a mass of compost is subjected to subatmospheric pressure in a vacuum chamber;
the mass of compost being subjected to said subatmospheric pressure in a packaged form, the mass of compost being within an envelope allowing the passage of the water vapour, and water vapour is removed from the mass of compost resulting in a cooled mass of compost, wherein the weight of the mass of compost is reduced by evaporation of water from the mass of compost by at least 0.1% by weight based on the total weight of the mass of compost while at subatmospheric pressure, and said cooled mass of compost is transported; and
wherein the mycelium of mushrooms is mycelium of mushrooms for human consumption.

By evaporating water in the compost and substantially eliminating that evaporated water from the compost, the temperature of the compost can be lowered effectively and quickly. This process is fairly homogeneous, that is, the cooling process takes place at about the same rate in the core of the mass of compost as on the outside of the mass of compost, even for large masses. This allows the method to be performed with relatively large (unitary) masses of compost, e.g. >100 kg and preferably >500 kg, and even >1000 kg such as >1100 kg. Thus the method according to the invention saves money with respect to the cost of handling (fewer man-hours needed), and cost of transport (more effective use of the cargo volume than with the small blocks according to the state of the art). The envelope is any kind of packaging that holds the compost together and may, for example be a rigid container; plastic foil wrapped around the mass of compost; or a bag. Preferably the compost is baled. The packaged form allows the mass of compost to be handled easily before and after cooling. Passage of water vapour is, for example, possible by perforations in the envelope. The use of a vacuum chamber obviates the need for an (impermeable) envelope (such as a plastic bag) provided with a connection piece for connecting the envelope containing the mass of compost to a vacuum generation device. The term "transport" and variations thereof involve any form of transport, including transport to a storage space. In general, however, transport will involve transport in a cargo space of a truck and/or in a sea container.

The inoculated compost is preferably stage 2 or stage 3 compost. This is a commercially very important embodiment of the method according to the present invention, allowing for the transport of compost with the mycelium in hibernation. Compost can be inoculated at a central location and distributed from there to mushroom farms, allowing the mushroom farms to receive inoculated compost that allows for the production of mushrooms with high yield and in a predictable timeframe. A commercially very important mycelium is mycelium of Agaricus bisporus.

DE3830289 discloses a method of stabilising compost, wherein the compost is subjected to a vacuum until the water content is reduced to an extent where the micro-organisms are no longer capable of metabolising organic matter. Thermal energy is supplied. This method is very time-consuming because of the relatively large amount of water that has to be evaporated. This adversely affects the through-put through the costly vacuum-chamber and makes it commercially less attractive.

IE72947 and GB2317898 discloses a method of manufacture and transportation (implicitly) of mushroom spawn wherein a granular substrate is treated in open sacks. They do not disclose that this granular substrate is compost.

BE904994 discloses a method for the preparation, inoculation and packaging of a sterilised or partially sterilised substrate for mushrooms. The substrate is not compost. BE904994 discloses that the substrate is cooled down by vapour condensation while mixing.

HU9800638 discloses a method of preparing blocks of mushroom substrate using foil a hermetically sealing foil bag (claim 1) and vacuum to remove air (page 10) via a tube from the foil bag so as to impregnate the mushroom substrate with a liquid inoculum and to form a compact block.

According to a preferred embodiment, after cooling of the mass of compost the mass of compost is allowed to return to atmospheric pressure.

This can very easily be accomplished by the introduction of air. This allows avoiding the possible cost and/or effort needed to maintain subatmosferic pressure, in particular during transport.

According to a preferred embodiment, while the mass of compost is subjected to subatmospheric pressure, the subatmospheric gas in the vacuum chamber is dehumidified.

This accelerates the rate of evaporation of water from the compost.

According to a preferred embodiment, the dehumidification is performed by cooling the subatmospheric gas in the vacuum chamber.

Cooling allows for condensation of the water, the water being collected. It also allows for contacting the compost with cooled subatmospheric gas, speeding up the cooling process.

According to a preferred embodiment, the mass of compost is compressed before being introduced in the vacuum chamber.

In that way, more compost can be cooled in a vacuum chamber of a given size in a single run, saving cost. In addition or alternatively it allows the transport of more compost in a shipping container or transport vehicle. Typically the density of the compressed compost will be between 350 kg per cubic meter and 750 kg per cubic meter. It has been found that such a density does not have too much of an adverse effect on the duration of the cooling by evaporation. It increases through-put through the vacuum chamber.

According to a preferred embodiment, the weight of the mass of compost is reduced by evaporation of water from the mass of compost by at least 0.3% by weight based on the total weight of the mass of compost, preferably at least 0.5% by weight.

This is equivalent to a substantial drop of the temperature of the mass of compost. This reduction is generally realized in less than 1.5 hours, such as less than 1 hour so as ensure that the amount of heat necessary for the evaporation of water is more than the amount of heat generated in the compost during that time. This reduces the microbiological activity which in turn helps to lower the temperature of the compost more efficiently.

According to a preferred embodiment, the mass of compost is subjected to subatmospheric pressure at a pressure and for a time that results in a temperature of the mass of compost of less than 15 °C, preferably less than 12 °C and more preferably less than 9 °C.

This results in a mass of compost that can be transported very well because its temperature will not quickly rise during storage or transport.

According to an especially preferred embodiment, the temperature of the cooled mass of compost is less than 4 °C.

This substantially halts the production of carbon dioxide, increased levels of which affect the mushroom yield. A temperature this low reduces or even eliminates the need to provide air to the cooled mass of compost. This saves cost during transport.

According to a favourable embodiment, the cooled mass of compost is transported to a cooled truck.

This allows the compost to retain a low temperature during transport by the truck. The cooled truck may comprise a cooled sea container, allowing further transport aboard a ship over long distances.

According to an especially preferred embodiment, after cooling the mass of compost, it is placed in an environment having a temperature below 0 °C.

This will allow the mass of compost to become frozen, effectively halting mycelium growth without detrimental effect on the yield in case of mycelium like that of Agaricus bisporus and possibly killing undersirable organisms. It also allows storage of the compost for more than 3 months without any deleterious effect, in case of mycelium like that of Agaricus bisporus. Furthermore, it allows for time-consuming transport of cooled compost over long distances in a cooled sea container.

The present invention will now be illustrated with reference to the drawing where
Fig. 1a - d show the manufacturing of a bale of compost to be cooled down using the method according to the invention; and
Fig. 2 shows a vacuum chamber for performing the method according to the invention.

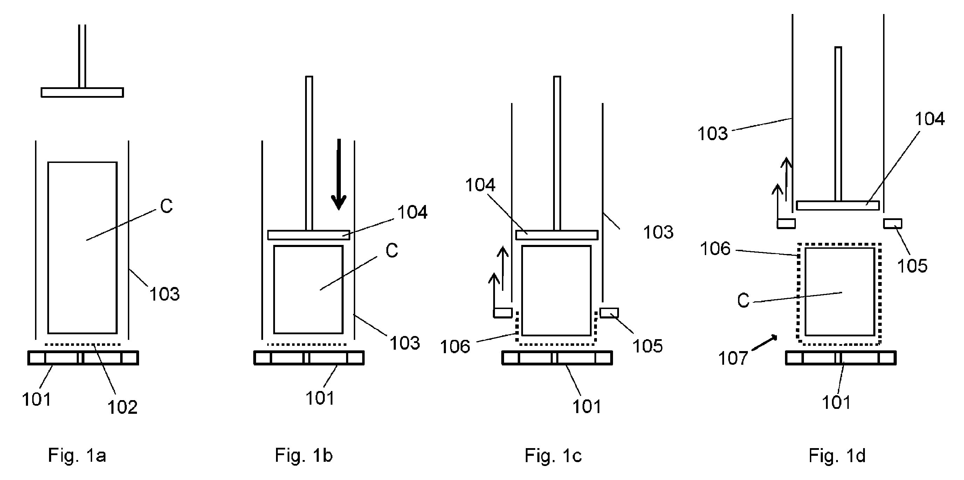

Fig. 1a shows a pallet 101 covered with a piece of plastic such as a plastic sheet (foil) 102 or a piece of cloth. A loading chamber 103 in the form of a pipe with two open ends is placed upright on the plastic 102. The loading chamber is filled with 1500 kg of compost C. After depositing the compost C into the loading chamber 103, it has a density of about 0.35 kg/l.

To reduce the transport volume and/or make the most use of the capacity (volume) of a vacuum chamber (as will be explained below), the compost C is compacted using a loosely fitting piston 104 to a density of about 0.6 kg/l (Fig. 1b). During compaction, air can escape from the compost C. The plastic sheet 102 prevents the compost C from being squeezed through openings in the pallet 101.

Subsequently, the loading chamber 103 is raised (while the piston 104 is kept at the same level as shown in Fig. 1b), as shown in Fig. 1c. An automatic wrapping device 105 wraps plastic foil 106 around the compacted compost C so as to form a bale 107. Such an automatic wrapping device 105 is well known in the art for wrapping plastic foil around various objects, such as boxes, for packaging purposes. By way of example, an ISC Big Bale Press (BBP65) available from Apollo Group, Coevorden, The Netherlands may be used.

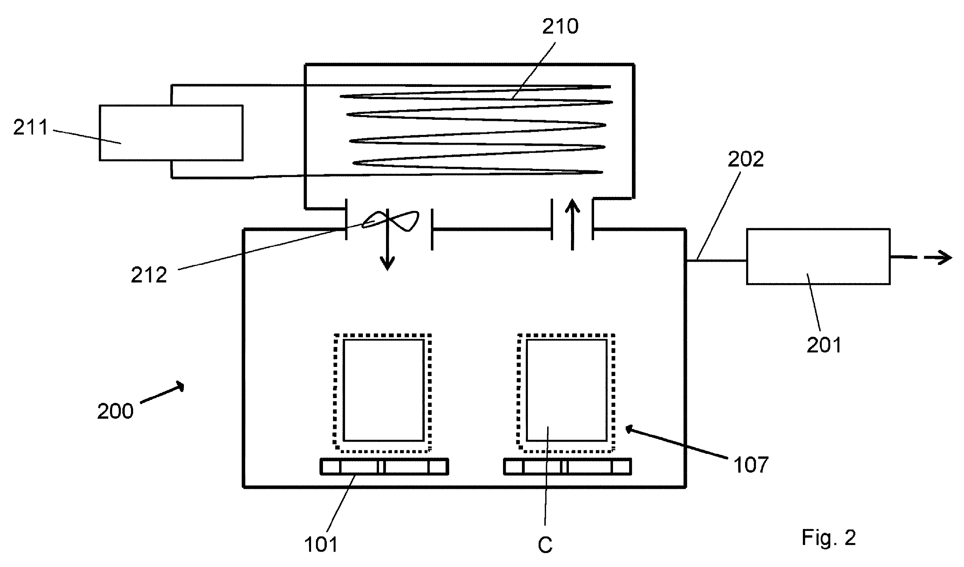

When the automatic wrapping device 105 reaches the top of the compacted compost C, the loading chamber 103 and the piston 104 are moved up together, allowing a fork-lift truck to pick up the pallet 101 with the compacted compost C enveloped in plastic foil 106 (i.e. bale 107) and place in a vacuum chamber 200 shown in Fig. 2. Baling of bulk goods is known in the art and does not require further elaboration. Instead of plastic foil 106 netting material may be used. If desired, to prevent the compost C from being completely sealed from the environment by the foil 106, the foil 106 enveloping the compost C may be provided with slits and/or perforated to create holes.

The vacuum chamber 200 shown in Fig. 2 contains two pallets 101 with a bale 107. The vacuum chamber 200 is connected to a vacuum pump 201 via a conduit 202 for lowering the pressure inside the vacuum chamber, such as to 0.007 bar. At that pressure, the boiling point of water is reduced significantly, causing water inside the compost C to evaporate. This requires heat, as a result of which the compost C cools down, and even better, cools down substantially homogeneously throughout the bales 107. Also, cooling down is quite quick, reducing the cost of cooling because the biological life inside the compost has less time generating heat.

To avoid the use of very low pressures, the air remaining inside the vacuum chamber 200 after reducing the pressure is dehumidified. This accelerates evaporation of water from the compost C. To this end a heat exchanger 210 is present connected to a cooling device 211. It is advantageous to actively circulate the air inside the vacuum chamber 200, such as using fan 212. Water condenses at the heat exchanger 210 and is collected.

After the bale 107 has reached a temperature of less than 4 °C, which is generally achieved within 45 minutes, the vacuum chamber 200 is opened and the bales 107 are transported to a cooled storage chamber (not shown) or a cooled truck (not shown). It is preferred that the temperature of the bales 107 is reduced to below zero to allow for long-time storage and/or time-consuming transport over long distances, such as in a cooled sea container.

With the above set up, two bales 107 of compost C totalling 3000 kg were subjected to subatmospherid pressure in the system described above. The initial temperature of the compost was 25 °C with a moisture level of 67 %. Reducing the pressure to 0.006 bar took about 25 minutes. This was followed by condensing water vapour for about 45 minutes, obtaining about 20 liter of water before the compost C was cooled to close to 0 °C.

The method according to the invention can be changed within the scope of the appended claims in several ways. For example, it is possible to contact the compost with a piece of cloth, which may help to accelerate evaporation of water from the compost.

## Claims

1. A method of transporting compost inoculated with mycelium of mushrooms, wherein the compost is transported at a temperature of less than 20 °C, **characterized in that** a mass of compost is subjected to subatmospheric pressure in a vacuum chamber;
the mass of compost being subjected to said subatmospheric pressure in a packaged form, the mass of compost being within an envelope allowing the passage of the water vapour, and water vapour is removed from the mass of compost resulting in a cooled mass of compost, wherein the weight of the mass of compost is reduced by evaporation of water from the mass of compost by at least 0.1% by weight based on the total weight of the mass of compost while at subatmospheric pressure, and said cooled mass of compost is transported; and
wherein the mycelium of mushrooms is mycelium of mushrooms for human consumption.

2. The method according to claim 1, **characterized in that** after cooling of the mass of compost the mass of compost is allowed to return to atmospheric pressure.

3. The method according to claim 1 or 2, **characterized in that** while the mass of compost is subjected to subatmospheric pressure, the subatmospheric gas in the vacuum chamber is dehumidified.

4. The method according to claim 3, **characterized in that** the dehumidification is performed by cooling the subatmospheric gas in the vacuum chamber.

5. The method according to any of the preceding claims, **characterized in that** the mass of compost is compressed before being introduced in the vacuum chamber.

6. The method according to any of the preceding claims, **characterized in that** the weight of the mass of compost is reduced by evaporation of water from the mass of compost by at least 0.3% by weight based on the total weight of the mass of compost, preferably at least 0.5% by weight.

7. The method according to any of the preceding claims, **characterized in that** the mass of compost is subjected to subatmospheric pressure at a pressure and for a time that results in a temperature of the mass of compost of less than 15 °C, preferably less than 12 °C and more preferably less than 9 °C.

8. The method according to any of the preceding claims, **characterized in that** the temperature of the cooled mass of compost is less than 4 °C.

9. The method according to any of the preceding claims, **characterized in that** the cooled mass of compost is transported to a cooled truck.

10. The method according to any of the preceding claims, wherein after cooling the mass of compost, it is placed in an environment having a temperature below 0 °C.

## Patentansprüche

1. Verfahren zum Transportieren von Kompost, beimpft mit Myzel von Pilzen, wobei der Kompost mit einer Temperatur von unter 20 °C transportiert wird, **dadurch gekennzeichnet, dass** eine Kompostmasse einem Unterdruck in einer Vakuumkammer ausgesetzt wird;
die Kompostmasse dem Unterdruck in verpackter Form ausgesetzt wird, die Kompostmasse sich in einer den Durchtritt des Wasserdampfes ermöglichenden Umhüllung befindet und Wasserdampf aus der Kompostmasse entfernt wird, was zu einer abgekühlten Kompostmasse führt, wobei das Gewicht der Kompostmasse durch Verdampfen von Wasser aus der Kompostmasse um mindestens 0,1 Gew.-%, bezogen auf das Gesamtgewicht der Kompostmasse, bei Unterdruck verringert wird, und die abgekühlte Kompostmasse transportiert wird; und
wobei das Myzel von Pilzen Myzel von Pilzen für den menschlichen Verzehr ist.

2. Verfahren nach Anspruch 1, **dadurch gekennzeichnet, dass** nach Abkühlen der Kompostmasse die Kompostmasse auf Atmosphärendruck zurückkehren gelassen wird.

3. Verfahren nach Anspruch 1 oder 2, **dadurch gekennzeichnet, dass**, während die Kompostmasse einem Unterdruck ausgesetzt wird, das bei Unterdruck in der Vakuumkammer befindliche Gas entfeuchtet wird.

4. Verfahren nach Anspruch 3, **dadurch gekennzeichnet, dass** die Entfeuchtung durch Abkühlen des bei Unterdruck in der Vakuumkammer befindlichen Gases durchgeführt wird.

5. Verfahren nach einem der vorangehenden Ansprüche, **dadurch gekennzeichnet, dass** die Kompostmasse komprimiert wird, bevor sie in die Vakuumkammer eingebracht wird.

6. Verfahren nach einem der vorangehenden Ansprüche, **dadurch gekennzeichnet, dass** das Gewicht der Kompostmasse durch Verdampfen von Wasser aus der Kompostmasse um mindestens 0,3 Gew.-%, bezogen auf das Gesamtgewicht der Kompostmasse, vorzugsweise mindestens 0,5 Gew.-%, verringert wird.

7. Verfahren nach einem der vorangehenden Ansprüche, **dadurch gekennzeichnet, dass** die Kompostmasse einem Unterdruck bei einem Druck und über eine Zeit, der zu einer Temperatur der Kompostmasse von unter 15 °C, bevorzugt unter 12 °C und bevorzugter unter 9 °C führt, ausgesetzt wird.

8. Verfahren nach einem der vorangehenden Ansprüche, **dadurch gekennzeichnet, dass** die Temperatur der abgekühlten Kompostmasse weniger als 4 °C beträgt.

9. Verfahren nach einem der vorangehenden Ansprüche, **dadurch gekennzeichnet, dass** die abgekühlte Kompostmasse zu einem gekühlten Lastkraftwagen transportiert wird.

10. Verfahren nach einem der vorangehenden Ansprüche, wobei nach Abkühlen der Kompostmasse die Kompostmasse in eine Umgebung mit einer Temperatur unter 0 °C gebracht wird.

## Revendications

1. Un procédé pour transporter du compost inoculé de mycélium de champignons, dans lequel le compost est transporté à une température de moins de 20°C, **caractérisé en ce qu'**une masse de compost est soumise à une pression sous-atmosphérique dans une chambre à vide ;
la masse de compost étant soumise à la pression sous-atmosphérique sous une forme enveloppée, la masse de compost étant placée dans une enveloppe permettant le passage de la vapeur d'eau, et la vapeur d'eau est éliminée de la masse de compost de façon à ce qu'il en résulte une masse de compost refroidie, le poids de la masse de compost étant réduit par évaporation d'eau depuis la masse de compost, d'au moins 0,1% en poids par rapport au poids total de la masse de compost tout en étant à une pression sous-atmosphérique, et ladite masse de compost refroidie est transportée ; et
le mycélium de champignon est un mycélium de champignon pour la consommation humaine.

2. Le procédé selon la revendication 1, **caractérisé en ce qu'**après refroidissement de la masse de compost, on laisse la masse de compost revenir à la pression atmosphérique.

3. Le procédé selon la revendication 1 ou la revendication 2, **caractérisé en ce que**, pendant que la masse de compost est soumise à une pression sous-atmosphérique, le gaz sous-atmosphérique dans la chambre à vide est déshumidifié.

4. Le procédé selon la revendication 3, **caractérisé en ce que** la déshumidification est réalisée par refroidissement du gaz sous-atmosphérique dans la chambre à vide.

5. Le procédé selon l'une quelconque des revendications précédentes, **caractérisé en ce que** la masse de compost est comprimée avant d'être introduite dans la chambre à vide.

6. Le procédé selon l'une quelconque des revendications précédentes, **caractérisé en ce que** le poids de la masse de compost est réduit par une évaporation d'eau depuis la masse de compost, d'au moins 0,3% en poids par rapport au poids total de la masse de compost, de préférence d'au moins 0,5% en poids.

7. Le procédé selon l'une quelconque des revendications précédentes, **caractérisé en ce que** la masse de compost est soumise à une pression sous-atmosphérique, à une pression et pendant une durée qui se traduisent par une température de la masse de compost inférieure à 15°C, de préférence inférieure à 12°C, et de façon encore préférée, inférieure à 9°C.

8. Le procédé selon l'une quelconque des revendications précédentes, **caractérisé en ce que** la température de la masse de compost refroidie est inférieure à 4°C.

9. Le procédé selon l'une quelconque des revendications précédentes, **caractérisé en ce que** la masse de compost refroidie est transportée vers un camion refroidi.

10. Le procédé selon l'une quelconque des revendications précédentes, **caractérisé en ce qu'**après refroidissement de la masse de compost, celle-ci est placée dans un environnement ayant une température inférieure à 0°C.
